# EUROPEAN PATENT APPLICATION

(11) **EP 4 814 041 A1**
(43) Date of publication of application: **30.09.2026**
(21) Application number: 25166561.8
(22) Date of filing: 27.03.2025
(51) Int. Cl.: C08J 3/26, A41D 19/00, C08F 220/44, C08F 236/06, C08J 5/02, C08K 3/22, C08K 5/00, C08L 9/04, C08L 13/02

(54) **LATEX COMPOSITION FOR DIP MOLDING AND DIPPED PRODUCT**

(71) Applicant: Bangkok Synthetics Co. Ltd., 10500 Bangkok (TH)
(72) Inventor: Ota, Hisanori, 10500 Bangkok (TH); Songsurang, Kultida, 10500 Bangkok (TH)
(74) Representative: Erbacher, Martin

(57) **Abstract**

Provided is a latex composition for dip molding that includes a carboxylated polymer latex with its unreacted carboxylic acid monomer in the latex is less than 2500ppm and a bi-functional epoxy crosslink agent with the molecular weight in the range of from 170 to 320. The combination of the polymer latex, the bi-functional epoxy crosslink agent and multivalent cation donor compounds such as zinc oxide and aluminum compound provides dipped product excellent qualities such as durability and aging stability.

## Description

### FIELD

The present invention relates to a polymer latex composition for dip molding, and to a dipped product obtainable therefrom. More specifically, the present invention relates to a latex composition for dip molding suitably usable for producing a glove, a condom, a catheter, a tube, a balloon, a nipple, a sack, or the like, and a method for producing such a dipped product.

### BACKGROUND

Dip-molded articles or dipped products such as gloves, condoms, catheters, tubes, balloons, obtained by dip molding of latex compositions are well known. Such dipped products are obtained by molding a natural rubber latex composition or a synthetic rubber latex composition. In the use of these dipped products, delayed allergic symptoms caused by residual chemical substances of dipped products produced by using chemical substances that cause irritation to the human body have been a growing problem in recent years. For example, a crosslinking agent, a crosslinking accelerator, or the like is blended in a rubber latex composition to improve durability, elasticity, and flexibility of the dipped products, but thiazole, thiuram, and carbamate used as such a crosslinking accelerators cause the IV-type delayed anaphylaxis (allergy). To overcome these problems, there is a need for a method for producing a dipped product with chemicals that are less likely to cause allergic symptoms.

For example, US10,023,718B2 discloses a dip molding product crosslinked by metal oxide without using sulfur and accelerators. JP7225162B2 discloses a dip molding method for producing a dipped product such as a glove, in which carboxylated acrylonitrile butadiene latex is crosslinked with multi-functional epoxy crosslinking agent and formed non accelerator contain dipped products. This method produces the bond formation between the carboxylated diene latex and an epoxy crosslinking agent.

### TECHNICAL PROBLEM

The dipped products prepared by the conventional sulfur crosslink system have potential problems with the chemicals residuals which are described above. In the conventional sulfur compound system, pre-vulcanization of the polymer latex must be tightly controlled because it significantly affects the physical properties of the dipped product, over pre-vulcanized polymer latex shows very poor film formation causes defect of dipped product consequently. The film formation process is very important to ensure good durability and quality of the dipped product. Due to the intrinsic nature of sulfur crosslink system, the sulfur complex will react mainly with the polymer at the inner particle, therefore an inter-diffusion of polymers beyond particle boundary must occur during the film formation process to present a good quality of dipped product. The degree of pre-vulcanization affects both crosslink density and inter-diffusion capability in sulfur crosslink system, which must be well balanced to achieve pot-life of compound, consistency of physical properties, and shelf-life of products.

The ionic crosslink structure is mainly responsible for source of physical strength and the covalent crosslink structure is mainly responsible for the durability of dipped products. Both crosslink structures are necessary to make a well-balanced property of dipped product. However, the dipped products prepared by a crosslink scheme using only an ionic crosslinking to make a dipped product, which brings a potential problem on durability of the products, the film obtained shows very poor durability due to the absence of covalent bonding between particles.

The dipped products prepared by the crosslink scheme described in JP7225162B2 are crosslinked by multi-functional epoxy chemicals and it was proved that such schemes are quite effective to make a covalent crosslink structure between polymer particles, it provides excellent durability on dipped products. However, it is also noticed that those schemes have problems with shorter pot-life of compound and shorter shelf-life of products. As a result, elongation of products is getting shorter as time proceeds. After study on those problem, it was surprisingly found that those problem may come from the high reactivity of multi-functional epoxy crosslink agent, which may create multi-connection point in crosslink structure which restrict polymer mobility, and also suspected that the functional group may remain active in the dipped product causes film properties change by aging, modulus increases, elongation decreases, as a results provides dipped product stiffer touch and feel.

Some benefits of using multi-functional epoxy chemicals may come from using them with high carboxylic acid monomer residual latex, for example the polymer latex with high residual of methacrylic acid (MAA). Because MAA residual also reacts with epoxy functional group of crosslink agent, even one epoxy group in multi-functional epoxy chemical reacts with MAA residual, still more than two epoxy chemicals are active to create a crosslink reaction. However, the reaction between MAA residual and epoxy group in crosslink agent is difficult to predict how reaction happens, in such a way that one molecule of multi-functional epoxy chemical reacts with one molecule of MAA or two or three or more. It is also difficult to predict that epoxy chemicals react with MAA bound polymer or with free MAA residual. Those unpredictable reaction schemes bring difficulty to design the dosage of crosslink agent against polymer latex.

The crosslink point in polymer film should be evenly dispersed to get the balance between strength and softness of film product, from this concept also, to use multi-functional epoxy chemicals is not good option for making a dipped product.

In a description of this patent, "multi-functional epoxy" means "more than one glycidyl group", "bi-functional epoxy" means "two glycidyl group" and "tri-functional epoxy" means "three glycidyl group".

### SOLUTION TO PROBLEM

Recognizing the above problems, the purpose of this invention is to provide a latex composition for dip molding and a product obtained therefrom overcoming drawbacks of the prior art, especially to provide a method for producing a dipped product, using particular latex composition and particular crosslink agent capable of improving an obtained dipped product in terms of physical strength, softness, stretchability, elasticity, durability, aging stability, and consistency of quality.
The above objects are achieved in accordance with the subject-matter of the independent claims. Further embodiments result from the sub-claims and the following detailed description.

In the dipping film formation process, after polymer particle's stability is instantly destroyed by coagulant chemical, there is a stage where the particles come close each other and get packed, called gelation stage. At this stage, a thin layer of water (serum) exists between the closely contacted particles, where the reaction between the epoxy group from the cross-linking agent and the carboxylic acid from the latex polymer takes place. This invention offers a way to control that favorable reaction is generated and unfavorable reaction is not generated in the thin serum layer.

The favorable reaction in the thin serum layer is the reaction to create a crosslink between carboxylic acid group on one particle surface and carboxylic acid group on another particle surface via bi-functional epoxy crosslink agent. The unfavorable reaction is the
reaction between bi-functional epoxy chemical and carboxylic acid monomer residual exists in the thin serum layer, or another type of unfavorable reaction is the reaction to create a crosslink between two carboxylic acid groups on one particle surface via bi-functional epoxy crosslink agent.

In polymer latex, reactive carboxylic acid is mainly located on a particle surface or in a thin serum layer exist between the particles. For example, methacrylic acid (MAA) bound polymer on the particle surface or in serum layer can create a crosslinked network structure, whereas MAA monomer remaining in the serum cannot form any network structure by the reaction with bi-functional epoxy compound. If the MAA residual in the polymer latex is high, it is more prone to generate the above described unfavorable reaction, which brings dipped product poor durability and quality. Therefore, it is important to control and minimize residual carboxylic acid in polymer latex in case of using bi-functional epoxy crosslink agent.

Another important factor to get more favorable reactions is to control the molecular size of the bi-functional epoxy crosslink agent. This invention reveals that the molecular size or molecular weight (MW) of the bi-functional epoxy crosslink agent has an impact on generation of a bridge crosslink structure between particles. It was found that there is an optimum size of the bi-functional epoxy crosslink agent to perform good crosslink capability.

This invention provides two important control factors, which are described below , to generate sufficient crosslink structure between particles in the preparation of dipped products, thereby enabling the production of dipped products with high durability and consistency.

Said two important control factors are
1. to control carboxylic acid monomer residual in polymer latex to be less than 2500 ppm; and
2. to use bi-functional epoxy chemical with a molecular weight is in the range of 170 to 320 as a covalent crosslink agent.

The present invention also demonstrates the method to make a balance between durability and elasticity of dipped products by the combination of highly pre-crosslinked polymer latex and bi-functional epoxy chemical with cation donor compound. This invention enables to produce dipped products with durable, reliable, safe feeling and tactile, comfortable, soft feeling together.

### DESCRIPTION OF EMBODIMENTS

According to a first embodiment, the present invention relates to a latex composition for dip molding comprising,
(A) a polymer comprising a structural unit derived from an ethylenically unsaturated carboxylic acid monomer; and
(B) an epoxy crosslinking agent that contains exactly two glycidyl groups and at least two ether groups,
wherein
- the polymer comprises less than 2500 ppm (mass ppm) of unreacted monomer with respect to the total mass of the polymer;
- the epoxy crosslinking agent has a molecular weight in the range of from 170 to 320; and
the epoxy crosslinking agent is comprised in the latex composition in an amount of 0.1 to 5 parts by mass based on 100 parts by mass of the polymer.

According to a second embodiment, in the first embodiment, the polymer comprises 50 to 78 mass% of a structural unit derived from a conjugated diene monomer, 20 to 40 mass% of a structural unit derived from an ethylenically unsaturated nitrile monomer, and 2 to 10 mass% of the structural unit derived from an ethylenically unsaturated carboxylic acid monomer, based on the total mass of the polymer, respectively..

According to a third embodiment, in the first or the second embodiment, the polymer has a MEK-insoluble content of 50% or more.

According to a fourth embodiment, in any of the first to the third embodiment, the latex composition further comprises an ionic crosslink agent selected from the group consisting of zinc oxide, aluminum compound and a mixture thereof.

According to a fifth embodiment, in the fourth embodiment, the ionic crosslink agent is an aluminum compound.

In a sixth embodiment, in any of the first to the fifth embodiment, the epoxy crosslinking agent is selected from the group consisting of poly(ethylene glycol) diglycidyl ether comprising 1 to 4 ethylene glycol units; 1,4-butanediol diglycidyl ether; neopentyl glycol diglycidyl ether; and a mixture of two or more thereof.
in a seventh embodiment, the invention provides a dipped product obtainable by a process comprising a step of curing the dip molding composition according to any one of the first to the sixth embodiment.

According to an eighth embodiment, in the seventh embodiment, the dipped product is a glove.

Hereinafter, a latex composition for dipped products and a method for producing a dipped product according to further embodiments of the present invention will be described. The present invention is not limited to the following embodiments at all and the invention may be realized by combining any embodiments and parts thereof.

### <Polymer Latex>

The latex composition for a dipped molding product of the present invention includes a polymer which may be a polymer latex, the polymer comprising an ethylenically unsaturated carboxylic acid monomer, i.e., a carboxylic acid containing polymer. The latex composition can be a dispersion and a dispersion medium of the dispersion can be solvent, such as an aqueous solvent. E.g., water, alcohol, and alcohol aqueous solution can preferably be used as a dispersion medium in the latex composition for dip molding of the present invention.

The polymer can be selected from the group consisting of carboxylated nitrile butadiene rubber (NBR) and carboxylated methyl methacrylate butadiene rubber (MBR). The polymer included in the latex composition for dip molding of the present invention must include at least a structural unit derived from an ethylenically unsaturated carboxylic acid monomer in the polymer structure, which can be a reactive point for crosslink agent in the process to make a dipped product. "structural unit derived from" in terms of the present disclosure refers to a structural unit of the polymer obtained by polymerizing a monomer from which the structural unit is derived.

The ethylenically unsaturated carboxylic acid monomer (from which the "structural unit derived from an ethylenically unsaturated carboxylic acid monomer" is derived) is not particularly limited if it has an ethylenically unsaturated bond and a carboxyl group or a salt thereof. Examples of the ethylenically unsaturated carboxylic acid monomers include acrylic acid, methacrylic acid, itaconic acid, maleic acid, fumaric acid, maleic anhydride, citraconic anhydride, and salts thereof. Among them, acrylic acid, methacrylic acid and salts thereof are preferable. One of these ethylenically unsaturated carboxylic acid monomers can be used, or two or more of these ethylenically unsaturated carboxylic acid monomers can be used in combination. Examples of the salt of the aforementioned ethylenically unsaturated carboxylic acid monomers include a monovalent metal salt of an alkali metal or the like such as sodium and potassium, a bivalent metal salt of an alkaline-earth metal such as magnesium and calcium, an ammonium salt, and an organic amine salt.

The polymer included in the latex composition for dip molding of the present invention can, in addition, have a structural unit derived from a conjugated diene monomer. The conjugated diene monomer (from which the "structural unit derived from a conjugated diene monomer" is derived) is not particularly limited if it has a structure with two double bonds separated by one single bond. Examples of the conjugated diene monomer include 1,3-butadiene, isoprene, 2,3-dimethyl-1,3-butadiene, 2-ethyl-1,3-butadiene, 1,3-pentadiene, and chloroprene. One of these conjugated diene monomers can be used, or two or more of these conjugated diene monomers can be used in combination.

The polymer included in the latex composition for dip molding of the present invention can further include a structural unit derived from an ethylenically unsaturated nitrile monomer. This inclusion further improves the dipped product in oil resistance, abrasion resistance, and tear strength. The ethylenically unsaturated nitrile monomer (from which the "structural unit derived from an ethylenically unsaturated nitrile monomer" is derived) is not particularly limited if it has an ethylenically unsaturated bond and a nitrile group. Examples of the ethylenically unsaturated nitrile monomer include acrylonitrile, methacrylonitrile, fumaronitrile, α-chloroacrylonitrile, and α-cyanoethyl acrylonitrile. One of these ethylenically unsaturated nitrile monomers can be used, or two or more of these ethylenically unsaturated nitrile monomers can be used in combination.

The polymer included in the latex composition for dip molding of the present invention can, in addition, have a structural unit derived from a monomer other than the ethylenically unsaturated carboxylic acid monomer, the conjugated diene monomer, and the ethylenically unsaturated nitrile monomer. The other monomer (from which the "structural unit derived from a monomer other than the ethylenically unsaturated carboxylic acid monomer, the conjugated diene monomer, and the ethylenically unsaturated nitrile monomer" is derived) is not particularly limited if it can be copolymerized with the aforementioned monomers. Examples of the other monomer include, an ethylenically unsaturated sulfonic acid monomer such as acrylamidopropane sulfonic acid or styrene sulfonic acid, an ethylenically unsaturated carboxylic acid ester monomer such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, monoethyl itaconate, monobutyl fumarate, monobutyl maleate, dibutyl maleate, dibutyl fumarate, ethyl maleate, mono2-hydroxypropyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, dimethylaminoethyl (meth)acrylate, 2-sulfoethyl acrylate, or 2-sulfopropyl methacrylate; an ethylenically unsaturated amide monomer such as (meth)acrylamide, N-methylol (meth)acrylamide, N,N-dimethylol (meth)acrylamide, N-methoxymethyl (meth)acrylamide, or N-propoxymethyl (meth)acrylamide; a vinyl aromatic monomer such as styrene, alkylstyrene, or vinylnaphthalene; fluoroalkyl vinyl ether such as fluoroethyl vinyl ether; vinylpyridine; and nonconjugated diene monomer such as vinyl norbornene, dicyclopentadiene, or 1,4-hexadiene. One of these monomers can be used, or two or more of these monomers can be used in combination.

In the polymer included in the latex composition for dip molding, the amount of the structural unit derived from the ethylenically unsaturated carboxylic acid monomer is preferably 0.1 to 15 mass% based on the entire structural units, i.e. the total mass of the polymer. The aforementioned amount is more preferably 2 to 10 mass%, still more preferably 3 to 8 mass% based on the entire structural units, i.e. the total mass of the polymer. With these amounts, the functional effect of the present invention can be produced more effectively.

In the polymer included in the latex composition for dip molding, the amount of the structural unit derived from the conjugated diene monomer is preferably 30 to 90 mass% based on the entire structural units, i.e. the total mass of the polymer. The aforementioned amount is more preferably 40 to 80 mass%, still more preferably 50 to 78 mass% based on the entire structural units, i.e. the total mass of the polymer. With these amounts, the functional effect of the present invention can be produced more effectively.

In the polymer included in the latex composition for dip molding, the amount of the structural unit derived from the ethylenically unsaturated nitrile monomer is preferably 10 to 50 mass% based on the entire structural units, i.e. the total mass of the polymer. The aforementioned ratio is more preferably 15 to 45 mass%, still more preferably 20 to 40 mass% based on the entire structural units, i.e. the total mass of the polymer. With these amounts, the functional effect of the present invention can be produced more effectively.

In the polymer included in the latex composition for dip molding, the amount of the structural unit derived from the other monomer is preferably 0 to 50 mass% based on the entire structural units, i.e. the total mass of the polymer.
The total amount of all structural units derived from the different monomers adds up to 100 wt. %.

In a preferred embodiment, the amounts of the structural unit derived from the ethylenically unsaturated carboxylic acid monomer, the structural unit derived from the conjugated diene monomer, and the structural unit derived from the ethylenically unsaturated nitrile monomer, in the polymer included in the latex composition for dip molding, are for example, 2 to10, 50 to 78, 20 to 40 (mass%), based on the total mass of the polymer, respectively.

### <Method for producing the polymer>

To produce the polymer, i.e. the polymer latex, the polymer is produced by polymerizing monomers, including ethylenically unsaturated carboxylic acid monomers, and optionally at least one of conjugated diene monomers, ethylenically unsaturated nitrile monomers and other monomers. The method for producing the polymer preferably includes a step of polymerizing a monomer composition including the ethylenically unsaturated carboxylic acid monomer, hereinafter also referred to as "polymerization step". Specific examples and preferred examples of the monomer component, and preferred amounts and ratios of the monomers are the same as those of the respective structural units described above.

The polymerization method for the monomer component is not particularly limited but may preferably be emulsion polymerization. The emulsion polymerization may be performed in the presence of an emulsifier. The emulsifier used for emulsion polymerization is not particularly limited. Examples of the emulsifier include; a nonionic emulsifier such as polyoxyethylene alkyl ether, polyoxyethylene alkyl phenol ether, polyoxyethylene alkyl ester, or polyoxyethylenesorbitane alkyl ester; an anionic emulsifier such as fatty acid of myristic acid, palmitic acid, oleic acid, linolenic acid, and salts thereof, ester phosphate such as isopropylphosphate or polyoxyethylene alkyl ether phosphate, alkyldiphenyl ether disulfonate, lauryldiphenyloxysulphonate disodium salt, alkylnaphthalenesulfonate, a sodium salt of naphthalenesulfonate formalin condensate, sodium dialkyl sulfosuccinate, alkylbenzene sulfonate, alkylallyl sulfonate, alkyl sulfate, a higher alcohol sulfate ester salt, alkyl sulfosuccinic acid or sodium dodecylbenzenesulfonate; and a copolymerizable emulsifier containing a double bond such as sulfone ester of α,β-unsaturated carbonic acid, sulfate ester of α,β-unsaturated carbonic acid, or sulfoalkyl allyl ether. The emulsifiers can be used with any original source such as bio based or petrochemical products. The usage of the emulsifier is not particularly limited, but is 0.1 to 10 parts by mass, preferably 0.5 to 6.0 parts by mass, based on 100 parts by mass of the usage of the total monomer. The emulsifiers can be used individually, or two or more of them can be used in combination. The emulsifier can be fed at a time or several times when producing the polymer latex.

Water is preferable as the solvent used in the polymerization step. The amount of water is preferably 70 to 250 parts by mass and more preferably 80 to 170 parts by mass based on 100 parts by mass of the amount of the total monomer. The stability in the polymerization step can be sufficiently maintained by setting the amount of water to 70 parts by mass or more. By setting the usage of water to 250 parts by mass or less, the energy and time required for a post-treatment after polymerization can be saved, thereby enabling more efficient production of the polymer latex.

In the polymerization step, a chain transfer agent can be used as a molecular weight regulator of the polymer, as necessary. Examples of the chain transfer agent include mercaptans such as t-dodecyl mercaptan, n-dodecyl mercaptan, or mercaptoethanol, halogenated hydrocarbon such as carbon tetrachloride, methylene chloride, or methylene bromide, and α-methylstyrene dimer. The chain transfer agent is preferably mercaptans, such as t-dodecyl mercaptan or n-dodecyl mercaptan. The amount of the chain transfer agent in the production of the polymer is preferably 0.01 to 10 parts by mass, more preferably 0.03 to 5 parts by mass, still more preferably 0.1 to 2 parts by mass, based on 100 parts by mass of the amount of the total monomer.

In the polymerization step, a polymerization initiator is preferably used. The polymerization initiator is not particularly limited. Examples of the polymerization initiator include potassium persulfate, ammonium persulfate, sodium persulfate, perphosphate, hydrogen peroxide, t-butyl hydroperoxide, 1,1,3,3-tetramethylbutylhydroperoxide, p-menthane hydroperoxide, 2,5-dimethylhexane-2,5-dihydroperoxide, diisopropylbenzene hydroperoxide, cumene hydroperoxide, di-t-butyl peroxide, di-α-cumyl peroxide, acetyl peroxide, isobutyryl peroxide, benzoyl peroxide, and azobisisobutyronitrile. These polymerization initiators can be used individually, or two or more of them can be used in combination. The amount of the polymerization initiator is not particularly limited but is preferably 0.001 to 10 parts by mass based on 100 parts by mass of the total monomer.

The aforementioned peroxide can be combined with a reductant to be used as a redox polymerization initiator. The reductant is not particularly limited. Examples of the reductant include a compound having a metal ion in a reduced state such as ferrous sulfate or cuprous naphthenate; sulfonates such as sodium methanesulfonate, formaldehyde sulfoxylates such as sodium formaldehyde sulfoxylate; 2-hydroxy-2-sulfonatoacetates such as disodium salt of 2-hydroxy-2-sulfonatoacetate; 2-hydroxy-2-sulfinatoacetates such as disodium salt of 2-hydroxy-2-sulfinatoacetate; amines such asformyldimethylaniline; and ascorbic acid. These reductants can be used individually, or two or more of them can be used in combination. The amount of the reductant is not particularly limited, but the mass ratio relative to the peroxide (peroxide / reductant) is preferably 0.01 to 100, more preferably 0.1 to 50.

The polymerization method used in the polymerization step can be any method, a batch process, a semi-batch process, or a continuous process. The method of adding the monomer in the polymerization step is not particularly limited, at a time, continuously or intermittently in accordance with the progress of the reaction. And the method of adding the monomer in the polymerization step can be changed during the polymerization reaction. The monomers use the polymerization reaction can be mixed before addition with any mixing ratio or can be separately added. In the case where various types of monomers are mixed, the mixing ratio can be fixed or can be changed.

The polymerization temperature in the polymerization step is not particularly limited, but is preferably 0 to 100 °C, more preferably 5 to 70 °C. The reactor vessel applicable for this polymerization step is any designs if pressure, heat and mixing controls are capable enough to run the reaction.

In the polymerization step, it is preferable that the polymerization reaction be stopped at the time of reaching a certain polymerization conversion rate by cooling the polymerization-based material or adding a polymerization terminator. The polymerization conversion rate at the time of stopping the polymerization reaction is, in general, preferably 80% or more, more preferably 85% or more.

The polymerization terminator is not particularly limited. Examples of the polymerization terminator include nitrite such as sodium nitrite, potassium nitrite, or ammonium nitrite, ascorbic acid, citric acid, hydroxylamine, hydroxylamine sulfate, diethylhydroxylamine, N-isopropylhydroxylamine, hydroxyamine sulfonic acid and alkali metal salts thereof, 2,2,6,6-tetramethylpiperidinooxyl compound such as 4-benzoyloxy-2,2,6,6-tetramethylpiperidinooxyl, sodium dimethyldithiocarbamate, dimethyldithiocarbamate, hydroquinone derivatives, catechol derivatives, resorcinol derivatives, aromatic hydroxydithiocarboxylic acid such as hydroxydimethylbenzenedithiocarboxylic acid, hydroxydiethylbenzenedithiocarboxylic acid, or hydroxydibutylbenzenedithiocarboxylic acid, and alkali metal salts thereof. The method of adding the polymerization terminator is not particularly limited but is preferably added as an aqueous solution. The amount of the polymerization terminator is generally 0.01 to 5 parts by mass, preferably 0.03 to 2 parts by mass, based on 100 parts by mass of the total monomer mixture.

In the method for producing the polymer latex, i.e. the polymer, a neutralization step using an alkaline material can be performed, as necessary. As alkaline material, inorganic salt such as hydroxide of a monovalent metal or a divalent metal, or carbonate, ammonia, and an organic amine are preferable. After the reaction is finished, the concentration of latex can be adjusted, as necessary. The neutralization step can be performed during the polymerization step or can be performed after the polymerization step. For example, the polymerization terminator can be added after the alkaline material is added or can be added simultaneously with the addition of the alkaline material.

After the polymerization step in the method for producing the polymer latex, it is possible to perform an additional step as necessary, such as removing unreacted monomer, adjusting the solid content concentration or the pH, or adding, for example, an auxiliary material for polymerization. The auxiliary material for polymerization is not particularly limited and can be an organic compound or can be an inorganic compound. Examples of the auxiliary material for polymerization include a deoxidizer, a dispersant, a surfactant, a chelator, a molecular weight modifier, a plasticizing agent, a particle size regulator, a defoaming agent, a masking agent, an anti-aging agent, a preservative, and an antimicrobial agent.

After the preparation of polymer latex, the quality of polymer latex is analyzed, as a polymer characteristic analysis purpose such as, polymer composition, MEK-insoluble%, molecular weight, as a latex characteristic analysis purpose such as, total solid content, pH, viscosity, surface tension, particle size, residual level of surfactant, residual level of unreacted monomer, coagulum, color, odor, bacteria content. A non-limiting example of a suitable apparatus for determining the particle size characteristics of the latex is a BECKMAN COULTER LS Particle Size Analyzer (model LS 13 320).

### - Method for measuring the amount of unreacted monomer (methacrylic acid (MAA) residual in the polymer

The amount of unreacted monomer, such as MAA in the polymer can be determined by the following method. 1 mg of latex (polymer) is placed into an acetone mix with toluene diluting solution and vortex at 1800 rpm for 5 minutes, at room temperature. 1 µl is tested using the Gas Chromatography (GC) Agilent 7890A. Using the GC with a flame ionization detector (FID) on a fused-silica capillary column 30m HP-Innowax, temperature is raised from 40 °C to 200 °C at a rate of 10 °C/min. The carrier gas (N2) is set at a flow rate of 3 ml/min and detection at 250 °C. The standard sample peak retention time and area are compared to the test sample to calculate the concentration. The content of residual MAA is determined and calculated via standard calibration curve.

### MEK-insoluble content

The degree of crosslinked structures of the obtained polymer (latex) can be determined by measuring the amount of insoluble fraction immersed in methyl ethyl ketone (MEK). The MEK-insoluble content% is affected by crosslinked structures between primary polymer chains generated during polymerization. The degree of crosslinked structures in a polymer has a good correlation to the MEK-insoluble%. In the application of dipped product, if the polymer latex is designed to be crosslinked by non-sulfur curing system, such as by an epoxy crosslink agent, the polymer latex should have some level of pre-crosslinked structure in the polymer, because it has a limitation to create crosslinked structure at inner particle of polymer latex in the dipping processes.

The polymer comprised in the latex composition may

### - Method for measuring the MEK-insoluble content

The measurement method for the MEK-insoluble content is described as follows. About 0.2g of a dry sample of polymer is precisely weighed to determine the pre-immersion weight of the latex composition dry sample (W1). This dry sample is placed in an 80-mesh metal basket and, in this state, the whole basket is immersed into 80ml of MEK in a 100ml beaker. The beaker is then sealed with a parafilm and leaves to stand for 24 hours at room temperature. Subsequently, the mesh basket is taken out of the beaker and hung in a draft and dried for 1 hour. After this mesh basket is vacuum-dried at 105°C for 1 hour, the weight thereof is measured, and the post-immersion weight of the polymer dry sample (W2) is determined by subtracting the weight of the basket. The MEK-insoluble% is calculated as follows.$MEK - insolublecontent \left(%byweight\right) = W 2 \left(g\right) / W 1 \left(g\right) \times 100$

### <Epoxy crosslink agents>

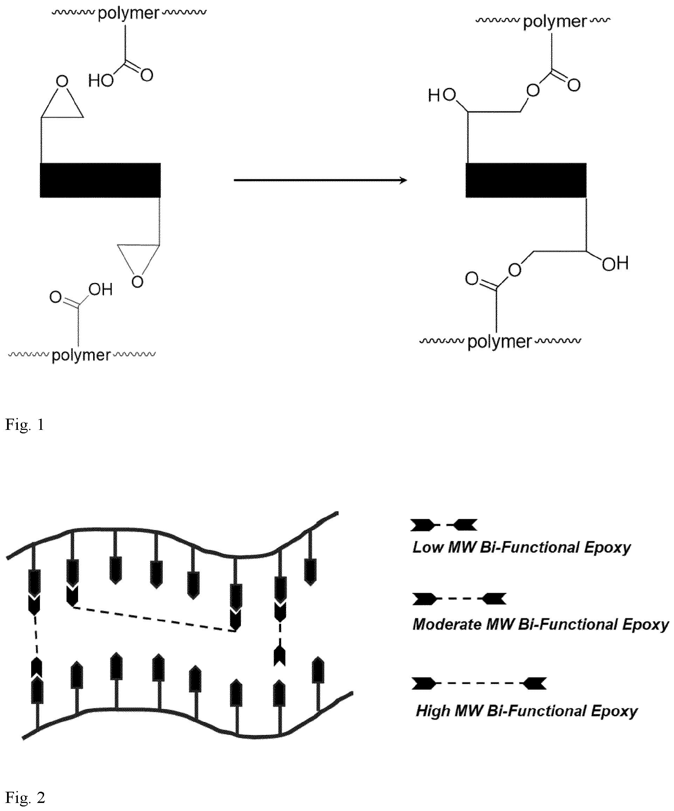

The latex composition for dip molding of the present invention includes a carboxylic acid containing polymer as described above, and a bi-functional epoxy crosslink agent, i.e. an epoxy crosslinking agent (compound) that contains exactly two glycidyl groups and at least two ether groups. In other words, the epoxy crosslinking agent has exactly two and not more than two glycidyl groups. The carboxylic acid functional group of the carboxylic acid containing polymer is a reactive crosslinking site for the bi-functional epoxy crosslink agent. By this reaction polymer latex can be covalently bonded through bi-functional epoxy crosslink agent. The schematic respective reaction scheme is shown in Fig. 1.

The epoxy crosslink agent used in the present invention is a glycidyl compound having (exactly) two glycidyl functional groups in the molecule. The glycidyl functional groups react with the polymer, preferably by applying a heat energy, which creates an ester bonding with the polymer. The formation of the ester covalent bonding between polymers located at the vicinity of polymer particle surface can improve the quality of the dipped product drastically. The number of glycidyl group in a molecule must be two, not to be one or three or any other number. The main structure of epoxy crosslink agent can be an alicyclic, aliphatic or aromatic hydrocarbon, and preferably glycidyl groups locate at terminal end of molecular structure.

Preferably, the epoxy crosslinking agent does not contain ester groups, i.e., does not comprise any ester groups in the molecular structure, because ester groups might have a chance to hydrolysis in the preparation process of dipped products.

The bi-functional epoxy crosslink agent includes at least two ether groups in the main structure. The ether groups in a molecule help crosslink agent to mingle with polymers on a particle surface in hydrophobic-hydrophilic interfacial environment.

Reactivity and dosage of epoxy crosslink agent needs to be considered in designing a formulation of dip molding compound. The effectiveness to create crosslink bonding between polymers depends on the characteristics of the epoxy chemicals such as, chemical structure, the number and the location of glycidyl group in a molecule, molecular weight, epoxide equivalent weight (EEW), polarity or solubility to water. It was surprisingly found that the molecular weight of the epoxy cross-linking agent has a critical impact on the generation of crosslinks between polymer particles especially in case of bi-functional epoxy chemicals. To achieve good durability for dipped products, the bi-functional epoxy chemicals must have a molecular weight in a certain range, which is from 170 to 320. In this range, the of bi-functional epoxy crosslinking agent shows high reactivity with carboxyl groups on particles of the polymer and is capable to create a crosslink between the polymer particles. This can be seen from the evaluation results of durability. The schematic drawing of this aspect is shown in Fig.2. Thereby in this invention in the range of 170 to 320 molecular weight of bi-functional epoxy chemicals can be used as crosslink agent, or two or more of those mixture agents can be also used in a combination as necessary.

The epoxy crosslink agent can be added to the polymer by dilution with other chemicals or by emulsification by surfactant to allow the epoxy chemicals to be sufficiently dispersed in the latex composition. The amount of bi-functional epoxy chemicals in polymer latex composition for dip molding process is from 0.1 to 5.0 parts by mass, preferably 0.2 to 3.0 parts by mass based on 100 parts by mass of the polymer. In case where the amount of the bi-functional epoxy chemical is excessively high dosage in compound, there is a concern that the shelf life of dipped products may be shorter by the influence of remaining active chemical in the products. In case where the amount of the bi-functional epoxy chemical is excessively low dosage, there is a possibility that the covalent bonding between the particles may not be sufficient, and the dipped products obtained will show poor durability.

This invention provides a latex composition for dip molding by the combination of a polymer with lower carboxylic acid residual and a bi-functional epoxy chemicals with molecular weight in the range of from 170 to 320 as a crosslink agent. The dipped product obtained by this method shows excellent durability, physical properties, and consistency.

### <Multivalent cation donor compounds>

The dipped product prepared by this invention may further have a crosslinked structure in the polymer between a carboxyl group derived from unit of unsaturated carboxylic acid monomer and a multivalent cation derived from calcium compound, and/or a multivalent metal oxide such as zinc oxide or an aluminum compound. The polymers are ionically bonded through the multivalent cation. The cation which has a positive charge can attract the polymer having a negative charge in the structural unit derived from a carboxylic acid in the polymer. Consequently, ionic crosslinks will be generated between carboxyl functional group in the polymer intermediated by the multivalent cation, which creates strong and a flexible crosslink point in dipped products. For example, bonds between carboxyl groups via ionic bonds with, Ca²⁺, Zn²⁺, and Al³⁺ can be formed.

The method to provide the multivalent cation donor in the latex composition can be achieved in several ways. E.g., the multivalent cation donor compound can be added in solution, in dispersion or any form of chemicals, and the method to introduce them into dipped product has several option such as addition into coagulant, addition into latex compound or other method are applicable if it does not cause any unfavorable stability problem and create ionic crosslink with polymers during dipping process.

The source of multivalent cation donor into the system will be, such as zinc compounds, magnesium compounds, aluminum compounds, calcium compounds, barium compounds, vanadium compounds, chromium compounds, lead compounds, iron compounds, titanium compounds, two or more of these compounds can be mixed to be used in combination, as necessary. These compounds may be metal salts or metal oxides, such as sodium aluminate, aluminium hydroxide, zinc oxide etc. In addition to those chemicals into the system, it is preferably include with stabilizing agent, for the purpose of controlling stability of the system and enhancing the effect of ionic crosslinking. Examples of stabilizing agent are polyol compounds, polyethylene glycol, polyvinyl alcohol, polycarboxylic acid, non-ionic surfactant, anionic surfactant, dispersant, condensate of sodium naphthalene sulfonate and formaldehyde, sodium polyacrylate, or any type of surfactant. The content amount of the stabilizing agent against multivalent donor compounds is preferably 0.1 to 50 mass%, more preferably 0.5 to 30 mass%.

The amount of the multivalent cation donor compounds is preferably 5 parts by mass or less, more preferably 3 parts by mass or less, based on 100 parts by mass of the latex composition for dip molding. In the case of using a tri-valent cation donor with solution-based chemical, such as aluminum compounds, the concentration of chemicals is preferably 10 % or less, more preferably 5 % or less and the amount needed is much smaller than those of dispersion-based chemical.

The ionic crosslinked structure is mainly responsible for source of physical strength and the covalent crosslink structure is mainly responsible for the durability of dipped product. Both crosslinks' structures are important to make a well-balanced property of dipped product.

### <Latex composition for dip molding and preparation method>

The pH of the latex composition may be adjusted to be approximately in the range of 9.0 to 10.5 to stabilize and accelerate acid dissociation. The acid dissociation will occur at a serum and a particle surface of polymer. pH adjuster can be any alkaline material such as potassium hydroxide, sodium hydroxide, ammonium hydroxide. The formulation components, bi-functional epoxy chemical as a covalent crosslink agent, zinc oxide dispersion and/or multivalent cation donor solution such as aluminum compound as an ionic crosslink agent, titanium dioxide dispersion as a color pigment, and the other components can be added into latex composition under stirring. The components that can be added are not particularly limited, examples of the other components include a surfactant, a color pigment, an anti-aging agent, a preservative, a wax, and an inorganic filler. The components can be added into the latex composition separately or by pre-mixed.

It is preferable that a vulcanizing agent and/or a vulcanization accelerator are not included in the latex composition for dip molding. This does not exclude such a small amount as to be able to greatly reduce its harmful effect. The total amount of the vulcanizing agent and the vulcanization accelerator is preferably 3 mass% or less based on 100 mass% of the polymer. A vulcanizing agent and a vulcanization accelerator generally used in dip molding can be used by adding to the latex composition for dip molding. A vulcanization agents or accelerators can be used by mixing two or more of these vulcanization agents or accelerators, also can be used together with other crosslink agents like epoxy crosslinking agents and metal oxide by any combination.

The compounded latex composition is carefully observed about separation, sedimentation, destabilization and any change, and pH, solid content, viscosity, coagulum level are generally monitored during operation.

### - Method for measuring the total solid content

The total solid content of the compounded latex composition, i.e. the cured (crosslinked) latex composition, can be measured by drying the compounded latex and dividing the weight after drying by the weight before drying. It can be measured by using about 8 g of the compounded latex. The compounded latex can be dried by putting it in a petri dish and heated by oven, the drying conditions can be 105 °C for 1 hour.

The latex composition formulated by this invention does not require pre-vulcanization or maturation period before use, bubbles or coagulum in the latex composition are removed carefully, then dipping process will be able to start.

The preparation method of latex composition for dip molding is not limited to the aforementioned method, can any method be applicable.

### <Method for producing a dipped product>

The method for producing a dipped product of the present invention is not particularly limited to any application, but can be applied to, for example, a glove, a condom, a catheter, a tube, a balloon, a nipple, a sack, and the like. That is, the dipped product may be a glove, a condom, a catheter, a tube, a balloon, a nipple, or a sack. The method for producing a dipped product of the present invention is not particularly limited but preferably includes a dip molding step of forming a film on a mold by the latex composition, and a crosslinking step of the polymers crosslink each other. The dip molding step and the crosslinking step can be simultaneously performed or can be separately performed in any order.

The dip molding step is not particularly limited. Examples of the dip molding step include a straight dipping method, a coagulant dipping method, an electro-immersion method, and a thermal immersion method. Among them, the straight dipping method and the coagulant dipping method are preferable since the dipped product having a uniform thickness is likely to be obtained. **In** the case of the coagulant dipping method, the performance is preferably made in such a way as that a forming mold is immersed in a coagulant solution to cause the coagulant to adhere to the surface of the mold, and then, the mold is immersed in the latex composition for dip molding, to form a coating film of the latex composition on the surface of the mold.

The coagulant used in the coagulant dipping method can be generally used in the form of a mixture of, for example, a coagulant component, a solvent, a surfactant, a wetting agent, an inorganic filler, and a demolding agent. Examples of the coagulant component include metal halide such as barium chloride, calcium chloride, magnesium chloride, aluminum chloride, or zinc chloride, nitrate such as barium nitrate, calcium nitrate, or zinc nitrate, acetate such as barium acetate, calcium acetate, or zinc acetate, sulfate such as calcium sulfate, magnesium sulfate, or aluminum sulfate, and acids such as acetic acid, sulfuric acid, hydrochloric acid, or nitric acid. Calcium nitrate or calcium chloride is preferably used. These compounds can be used individually, or two or more of them can be used in combination.

Examples of the solvent include water, alcohol, and acids. The surfactant is used for the purpose of causing the coagulant liquid to adhere to the surface of the mold uniformly and facilitating the demolding. Examples of the surfactant include a nonionic surfactant, a metallic soap, and other compounds. Examples of the metallic soap include calcium stearate, ammonium stearate, and zinc stearate. Examples of the inorganic filler include metal oxide, calcium carbonate, and talc.

The crosslinking step is a step of crosslinking polymers, this step can properly be designed to align with the formulation of dip molding composition and the polymer latex used. Generally, crosslink agents are added into latex composition at the compounding step, thereafter crosslinking reaction will start at latex composition state known as pre-vulcanization step and follow at dip molded film state in curing and post curing step, even after the dipped product is obtained crosslinking reaction still slowly proceeds. The dipped product produced by sulfur/accelerators crosslink agents needs to be carefully designed products based on understanding abovementioned phenomena. The latex composition for dip molding proposed by this invention is less likely to produce crosslink structure beside at the dip molding process, therefore the latex composition has longer pot-life and dipped products shows longer shelf-life. The crosslinking step can be performed in various ways depending on the required performance for the dipped product.

The following is an example of the steps for producing a dipped product from the latex composition for dip molding.
(1) Step of washing, drying at 50 to 100 °C, and preheating a forming mold.
(2) Step of immersing the forming mold in a coagulant solution including a coagulant, such as calcium ions or the like, then taking it out and drying it, causing the coagulant to adhere onto the surface of the forming mold and drying it.
(3) Step of immersing the forming mold, onto which the coagulant is caused to adhere in (2), in the latex composition for dip molding, and then taking it out, to gel the latex composition for dip molding.
(4) Step of performing a leaching treatment to the dip-molded article gelled in (3), with water or hot water of 30 to 80 °C and removing impurities and inessentials.
(5) Pre-curing step of performing a heat treatment to the molded article at a temperature of 60 to 150 °C for about 1 to 120 minutes and accelerating the drying of the dipped product; and curing step of accelerating the solidification and the crosslinking reaction of the dipped product.
(6) Step of performing a blocking prevention treatment to the dipped product, as necessary.
(7) Step of detaching the dipped product from the forming mold.

The order to perform the above (4) to (7) can be changed, as necessary.

Examples of the blocking prevention treatment include a chlorination treatment method by immersing the dipped product in an aqueous solution in which sodium hypochlorite and hydrochloric acid are mixed or by treating the dipped product in a chlorine gas chamber, a polymer coating method by coating a polymer having blocking prevention properties on the dipped product, and a slurry method by immersing the dipped product in an aqueous solution including a lubricant component. Any method can be performed. The blocking prevention treatment can be performed after and/or before detaching the dipped product from the mold.

According to the method for producing a dipped product of this embodiment, it is possible to provide a dipped product of which qualities such as physical strength, elongation, modulus, durability, flexibility, elasticity, consistency, and shelf-life, are improved.

### <Evaluation of dipped product>

In the method of the present invention, covalent bonding generated between the carboxylic acid groups through bi-functional epoxy crosslink agent, which is mainly responsible for the durability of dipped product, and ionic bonding generated between the carboxylic acid groups through multivalent cation, which is mainly responsible for source of physical strength, are required to build a crosslink structures to make a well-balanced property of dipped product.

The evaluation method of obtained dipped product must be well represented to show the degree of both crosslink structures by obtained results. The dipped product used for evaluation is prepared by demolding the dipped product from glove former in case of this invention but not limits only for glove former. The dipped product glove is treated under the condition of controlling the temperature and the humidity for over 1 day before evaluation.

### - Physical property of dipped product (Thickness of sample, Tensile strength, modulus, and elongation at break)

The dipped product is pretreated at the condition of temperature of 25 °C, humidity of 55RH% for 24 hours. Thickness of sample, Tensile strength, modulus, and elongation at break of dipped product are measured in accordance with the method prescribed in ASTM D412. A test piece is prepared by punching out dipped product gloves using Die-C manufactured by DUMBBELL CO., LTD. The physical properties are measured for example, using Allround Line universal tester Z-100 manufactured by Zwick Roell Corporation, at a tensile speed of 500 mm/min, a chuck distance of 75 mm, and gauge mark distance of 25 mm.

### - Aging Stability of dipped products

Aging stability on physical properties, especially on elongation of dipped products depends on the remaining active chemicals in product, antioxidant or quenchers level in product, and the environmental situation where the product is placed. Generally, minimizing active chemical residuals in products is the best primary solution for this problem. In this invention, aging stability is measured by change of elongation value before aging and after aging. The dipped product glove is aged followed by the ASTM D412 standard method and the aging stability is calculated by subtracting the value of elongation after aging from the value of elongation before aging.

### - Durability of dipped product glove

One of good indicator for generation of covalent crosslink between particles is the durability of dipped product, if covalent crosslink between particles is not enough, it shows poor durability on dipped product. In this invention, the degree of covalent crosslink generation between particles by the reaction of epoxy chemical and carboxylic acid are estimated by evaluating the durability of dipped product.

The evaluation method of durability of glove can be performed by the method described in Japanese Patent No. 6775678 (MIDORI ANZEN CO., LTD.). A type 1 dumbbell specimen according to JIS K6251 is cut out from the glove having a film thickness approximately from 0.05 mm to 0.06 mm, and immerse it in an artificial sweat (including 20 g of sodium chloride, 17.5 g of ammonium chloride, 17.1 g of lactic acid, and 5.0 g of acetic acid per 1 liter, and adjusted by a sodium hydroxide aqueous solution to have a pH of 4.7), to evaluate the durability. That is, a dumbbell specimen having a length of 120 mm is clamped by a fixed chuck and a movable chuck at a position located 15 mm from each of both ends and immerse to the part located 60 mm from the bottom side of the fixed chuck in the artificial sweat. The movable chuck is moved to a minimum position (i.e., relaxation state) at 147 mm (123%) and hold for 11 seconds, and then move for 1.8 seconds to return to the minimum position, via the maximum position (i.e., stretched state) at which the specimen has a length of 195 mm (163%). Taking this movement as one cycle, a cycle test is performed. The time for one cycle is 12.8 seconds, and the time is multiplied by the number of the cycles until the specimen is broken to obtain the time (minute) on the durability.

### - Stress Retention of dipped product

Stress retention is determined as follows. A test piece is prepared from a cured film in accordance with ASTM D412 using Die-C manufactured by Dumbbell Co., Ltd. , and gauge marks are drawn on the test piece at a gauge mark distance of 25mm. This test piece is mounted on a tensile strength testing machine at a chuck distance of 90mm, and stretched at a tensile speed of 500 mm/min. The stretching of the test piece is terminated once the gauge mark distance is doubled and, at the same time, the stress M0 at 100% elongation is measured. Change in the stress is measured while maintaining the test piece after the termination of the stretching, and the stress M6 is measured after a lapse of 6 minutes. Then, stress retention is calculated as (M6/M0) x100 (%). A higher stress retention indicates a state where more stress is maintained after the stretching, which represents a larger elastic deformation force causing the test piece to return back to the original shape upon removal of an external force and make the dipped product to have a better fit and more favorable qualities such as less wrinkles.

The latex composition for dip molding and the method for producing a dipped product according to the present invention are not limited to the configuration of the aforementioned embodiment. Further, the latex composition for dip molding and the method for producing a dipped product according to the present invention are not limited to those having the aforementioned operational effects. Various modifications can be made to the latex composition for dip molding and the method for producing a dipped product according to the present invention without departing from the gist of the present invention.

Although detailed description beyond the above will not be repeated here, conventionally known technical matters on the latex composition for dip molding and the method for producing a dipped product can be optionally employed in the present invention even if the matters are not directly described in the above.

### EXAMPLES

Hereinafter, the present invention will be elucidated by way of specific examples but is not limited only to these examples. In a description, "parts" means "parts by mass" and "%" means "mass%".

### <Preparation of a latex polymer>

A nitrogen substitution was performed inside a pressure resistant autoclave having a stirring device. In this pressure resistant autoclave, total 100 parts of monomer component, from 0.5 to 1.0 parts of a chain transfer agent t-dodecyl mercaptan (TDM) the type, the blending amount, the dosage were shown in Table 01, 150 parts of soft water, 2.5 parts of an anionic emulsifier sodium dodecylbenzenesulfonate (SDBS), 0.5 parts of dispersing agent, and 0.3 parts of potassium persulfate (KPS) as a polymerization initiator were introduced. The mixture reacted approximately for from 10 to 15 hours under stirring and with a polymerization temperature maintained at in the range from 35 to 50 °C. To stop polymerization reaction, pH adjuster and polymerization terminator were added to the inside of the pressure resistant autoclave to stop the polymerization reaction. At the end of polymerization reaction, final conversion was measured. After unreacted monomers were removed under reduced pressure from the obtained polymer latex composition, the pH and the concentration of the latex composition were adjusted to have a solid content concentration in the range of 44% to 46% and a pH of 8.0 to 8.5 by adding a potassium hydroxide aqueous solution and soft water. Thereafter, 1.0 parts (in terms of solid content) of aqueous dispersion (manufactured by AKRON DISPERSIONS, Bostex 362) of a butylated reaction product of p-cresol and dicyclopentadiene as an anti-aging agent was added to 100 parts by mass (in terms of solid content) of the polymer latex composition. After the polymer latex were prepared, particle size of the latex was measured by Particle Size Analyzer (BECKMAN COULTER model LS 13 320), MAA residual in the latex and MEK-insoluble content of polymer latex were measured by the method described in DESCRIPTION OF EMBODIMENTS. The results were shown in Table 01.

**Table 01**

| Polymer Latex No | | NBR1 | NBR2 | NBR3 | NBR4 | NBR5 | NBR6 | MBR1 | MBR2 | MBR3 |
|---|---|---|---|---|---|---|---|---|---|---|
| 1,3-Butadiene | phm | 67.5 | 59.0 | 59.0 | 59.0 | 56.5 | 67.5 | 65.0 | 64.0 | 64.0 |
| Acrylonitrile | phm | 27.0 | 35.0 | 35.0 | 35.0 | 38.0 | 27.0 | 0.0 | 0.0 | 0.0 |
| Methylmethacrylate | phm | 0.0 | 0.0 | 0.0 | 0.0 | 0.0 | 0.0 | 30.0 | 30.0 | 30.0 |
| Methacrylic acid | phm | 5.5 | 6.0 | 6.0 | 6.0 | 5.5 | 5.5 | 5.0 | 6.0 | 6.0 |
| Chain Transfer Agent | phm | 0.5 | 0.5 | 0.5 | 0.5 | 0.5 | 1.0 | 0.5 | 0.5 | 0.5 |
| Final conversion | % | 94.0 | 95.0 | 90.0 | 87.2 | 85.0 | 90.0 | 95.0 | 93.0 | 85.0 |
| Particle Size | nm | 112 | 108 | 105 | 104 | 104 | 108 | 111 | 109 | 101 |
| MAA residual in Latex | ppm | 750 | 1580 | 2210 | 2791 | 3532 | 1730 | 432 | 1320 | 3082 |
| MEK insoluble % of polymer | % | 60 | 62 | 53 | 51 | 46 | 26 | 55 | 53 | 48 |

### <Preparation of epoxy crosslink agent>

Various types of epoxy chemicals were prepared, molecular weight of chemicals was calculated based on the dominant chemical structure disclosed in supplier's information. Chemical structure, grade, number of glycidyl group in a molecular, molecular weight, supplier's name was shown in Table 02.

**Table 02**

| Epoxy No | Chemical Structure and grade | Number of glycidyl Group | Molecular Weight | Supplier's name |
|---|---|---|---|---|
| EP-01 | diglycidyl ether, Product Code 10781334 | 2 | 130 | Thermo Scientific Chemicals Co,Ltd |
| EP-02 | ethylene glycol diglycidyl ether, Product Code E0342 | 2 | 174 | Tokyo Chemical Industry Co,Ltd |
| EP-03 | 1,4-butanediol diglycidyl ether, Product Code B0964 | 2 | 202 | Tokyo Chemical Industry Co,Ltd |
| EP-04 | neopentyl glycol diglycidyl ether, Product Code 338036 | 2 | 216 | Sigma Aldrich Fine Chemicals |
| EP-05 | 1,4-cyclohexanedimethanol diglycidyl ether, Erisys GE-22 | 2 | 256 | Huntsman International LLC. |
| EP-06 | poly(ethylene glycol) diglycidyl ether, n=4, EPOLIGHT200E | 2 | 306 | Kyoeisha Chemical Co.,Ltd. |
| EP-07 | hydrogenated bisphenol A epoxy resin, HBPADGE | 2 | 353 | Jiangsu Tetra New Material Technology Co.,Ltd |
| EP-08 | poly(ethylene glycol) diglycidyl ether, MW400 | 2 | 400 | Myskinrecipes Thailand |
| EP-09 | poly(ethylene glycol) diglycidyl ether, n=9, EPOLIGHT400E | 2 | 526 | Kyoeisha Chemical Co.,Ltd. |
| EP-10 | poly(ethylene glycol) diglycidyl ether, Mn1000 Product Code 805505 | 2 | 1000 | Sigma Aldrich Fine Chemicals |
| EP-11 | 3,4-Epoxycyclohexylmethyl-3',4'-epoxycyclohexanecarboxylate, S-21 | 2 | 252 | Synasia Inc. |
| EP-12 | trimethylolpropane triglycidyl ether, Product Code 30499-70-8 | 3 | 302 | Sigma Aldrich Fine Chemicals |

### <Preparation of multivalent cation donor compounds>

This invention used three different types of multivalent cation donor compounds, calcium compound formulated in coagulant, zinc oxide dispersion and aluminum compound. The calcium compound in coagulant is primarily used to destroy the stability of polymer latex in the dipping process, but it also works as a crosslink agent. Zinc oxide dispersion was used 50% Zinc Oxide Dispersion from Aquaspersions Malaysia Sdn. Bhd.

Aluminum compounds were prepared as follows, 30% of citric acid solution and 30% of glycerin solution were mixed by the ratio of 1: 1 and sodium aluminate was added until precipitation occurred. The clear part of mixture was diluted to be 5% by distilled water and used this diluted solution as 100% active content.

### <Preparation of a compound for dip molding>

The solid content and pH of the polymer latex composition were adjusted to be in the range of 17% to 20%, 9.6 to 10.2, respectively, by adding 3% of potassium hydroxide aqueous solution and soft water under stirring conditions. Subsequently, 0.4 parts of sodium dodecylbenzenesulfonate (SDBS), zinc oxide dispersion (Aquaspersions Malaysia Sdn. Bhd) or aluminum compound as multivalent cation donor compound, epoxy crosslink agent, and 1.5 parts of titanium dioxide dispersion (Aquaspersions Malaysia Sdn. Bhd) were added under stirring, each blending amount was shown in Experiment Tables 03, 04, 05, 06, and 07, all chemicals' parts are against 100 parts (in terms of solid content) of the polymer latex composition. After blending all chemicals, compounded composition was continue to stirring 12 hrs. at room temperature. Thereafter, coagulum and bubbles were removed from the obtained compounded composition, and the temperature of the compounded composition was adjusted to be in the range of from 20 to 40 °C. Thereby, the latex composition for dipped product was obtained. The time after compound to dip were calculated based on the period from the last addition of chemical till dipping operation.

### <Production of a dipped product glove>

A glove as the dipped product was produced by following manner, a hand former made of ceramic, which has been washed and heated, was immersed in a coagulant composed of a mixed aqueous solution of 14 mass% of calcium nitrate and 1.5 mass% of calcium stearate, and then dried at 70 °C for 3 minutes, to cause the coagulant to adhere to the hand former. This hand former with the coagulant adhered thereto was immersed in the latex composition for dip molding for 12 to 30 seconds and taken out, and then, the taken-out former was heated at 80 °C for 1 minute, thereby producing a thin film with the latex composition gelled on the hand former. Thereafter, the hand former was subjected to a leaching treatment by immersing the former in hot water of 35 to 60 °C for 3 minutes, then left in a test oven and heated at 70 °C for 5 minutes and still left in the oven to be subjected to an additional heat treatment at 110 °C for 20 minutes.

After the hand former was cooled to have a surface temperature of 40 °C, the former was immersed for 40 seconds in a chlorinated immersion tank that stores a liquid adjusted to have an active chlorine concentration of 700 to 1000 ppm by sodium hypochlorite and hydrochloric acid. The taken-out hand former was washed with water, washed with a 0.4% of sodium sulfate aqueous solution, and washed with water again. Thereafter, the hand former was dried at 100 °C for 5 minutes, and sufficiently cooled at room temperature, and the polymer molded article formed on the surface of the former was demolded from the hand former. Thereby, a glove as the dipped product was produced.

### <Evaluation of dipped product>

The dipped product was evaluated by measuring tensile strength, modulus 300%, elongation, durability, aging stability, stress retention, following the method described above.

### <Experiment A>

Experiments A were aimed at verifying the differences in evaluation results of dipped products among vary in molecular weight of the bi-functional epoxy chemicals in formulation. A glove was produced using latex polymer (NBR1) and formulation were shown in Table 03. The dosage of the bi-functional epoxy chemical was adjusted by the molecular weight of the chemicals to be the same mol dosage of glycidyl group against polymer latex. Compounding, dipped product production process, and evaluation method were exactly followed by above described and evaluation results were reported in Table 03.

| Table 03 | | | | | | | | |
|---|---|---|---|---|---|---|---|---|
| | | | Experimen t A1 | Experimen t A2 | Experimen t A3 | Experimen t A4 | Experimen t A5 | Experimen t A6 |
| | Polymer Latex Code | | NBR1 | NBR1 | NBR1 | NBR1 | NBR1 | NBR1 |
| Compound Formulation | Potassium Hydroxide | phr | 1.4 | 1.4 | 1.4 | 1.4 | 1.4 | 1.4 |
| | Epoxy Chemical Code | | EP-01 | EP-02 | EP-03 | EP-04 | EP-04 | EP-05 |
| | Number of functional group | | 2 | 2 | 2 | 2 | 2 | 2 |
| | MW of Epoxy Chemical | | 130 | 174 | 202 | 216 | 216 | 256 |
| | Epoxy Chemical | phr | 0.4 | 0.5 | 0.6 | 0.7 | 0.7 | 0.8 |
| | Zinc Oxide | phr | 1.0 | 1.0 | 1.0 | 1.0 | 0.0 | 1.0 |
| | Alminum compound | phr | 0.0 | 0.0 | 0.0 | 0.0 | 1.0 | 0.0 |
| | Time after compound to Dip | day | 1 | 1 | 1 | 1 | 1 | 1 |
| Evaluation of dipped product | Thickness | mm | 0.057 | 0.057 | 0.058 | 0.057 | 0.059 | 0.059 |
| | Modulus 300% | MPa | 5.9 | 5.9 | 6.2 | 6.8 | 7.0 | 6.3 |
| | Elongation at break | % | 618 | 615 | 598 | 563 | 545 | 600 |
| | Tensile strength | MPa | 33.2 | 39.8 | 40.2 | 39.0 | 42.0 | 38.6 |
| | Durability of film | min | 153 | 320 | > 360 | > 360 | > 360 | > 360 |
| | Aging Stability ( 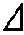 EL) | | 16 | 7 | 10 | 31 | 7 | 33 |

**Table 03 continued**

| | | | Experimen t A7 | Experimen t A8 | Experimen t A9 | Experimen t A10 | Experimen t A11 | Experimen t A12 |
|---|---|---|---|---|---|---|---|---|
| | Polymer Latex Code | | NBR1 | NBR1 | NBR1 | NBR1 | NBR1 | NBR1 |
| Compound Formulation | Potassium Hydroxide | phr | 1.4 | 1.4 | 1.4 | 1.4 | 1.4 | 1.4 |
| | Epoxy Chemical Code | | EP-06 | EP-07 | EP-08 | EP-09 | EP-10 | EP-11 |
| | Number of functional group | | 2 | 2 | 2 | 2 | 2 | 2 |
| | MW of Epoxy Chemical | | 306 | 353 | 400 | 526 | 1000 | 252 |
| | Epoxy Chemical | phr | 0.9 | 1.1 | 1.2 | 1.6 | 3.1 | 0.8 |
| | Zinc Oxide | phr | 1.0 | 1.0 | 1.0 | 1.0 | 1.0 | 1.0 |
| | Alminum compound | phr | 0.0 | 0.0 | 0.0 | 0.0 | 0.0 | 0.0 |
| | Time after compound to Dip | day | 1 | 1 | 1 | 1 | 1 | 1 |
| Evaluation of dipped product | Thickness | mm | 0.059 | 0.057 | 0.059 | 0.060 | 0.060 | 0.057 |
| | Modulus 300% | MPa | 7.1 | 7.0 | 6.8 | 6.1 | 6.0 | 6.6 |
| | Elongation at break | % | 580 | 585 | 590 | 620 | 610 | 590 |
| | Tensile strength | MPa | 37.7 | 35.9 | 36.4 | 37.2 | 34.1 | 36.8 |
| | Durability of film | min | 332 | 160 | 121 | 28 | 22 | 240 |
| | Aging Stability (EL) | | 30 | 37 | 31 | 25 | 14 | 5 |

### <Effect of molecular weight of epoxy chemical on quality of dipped product>

Experiment A results show the effect of the molecular weight of the bi-functional epoxy chemical on quality of product. In case of use molecular weight from 170 to 320 of epoxy chemical, the durability of dipped product showed excellent results, it exceeded over 300 min. The better durability on dipped product means it might have the structure of inter-particle covalent crosslinks generated by the bi-functional epoxy chemical. There are several speculations on this unique phenomenon, how molecular size of epoxy affect to crosslink generation.

If the molecular weight of the bi-functional epoxy chemical is too small or smaller than 170, it becomes difficult to create bridge crosslink structure between particles, it may create crosslink structure in the same particle or at the very vicinity of reactive point. On the other hand, if the molecular weight is too big or bigger than 320, it also becomes difficult to create bridge crosslink structure between particles due to strong interaction between the epoxy chemical and polymer particle. The epoxy chemical may remain at inner particle or at the surface of particle with very restricted mobility.

Therefore, this invention offers to use bi-functional epoxy crosslink agent with molecular weight in the range of 170 to 320 to produce a dipped product with excellent quality.

### <Experiment B>

Experiments B were aimed at verifying the differences in evaluation results of dipped products varied in carboxylic acid residual in polymer latex. A glove was produced using latex polymer and formulation shown in Table 04. Compounding, dipped product production process, evaluation methods were exactly followed by above described and evaluation results were reported in Table 04.

**Table 04**

| | | | Experimen t B1 | Experimen t B2 | Experimen t B3 | Experimen t B4 | Experimen t B5 | Experimen t B6 |
|---|---|---|---|---|---|---|---|---|
| | Polymer Latex No | | NBR1 | NBR2 | NBR2 | NBR3 | NBR4 | NBR5 |
| | MAA residual in latex | ppm | 750 | 1580 | 1580 | 2210 | 2791 | 3532 |
| Compound Formulation | Potassium Hydroxide | phr | 1.4 | 1.5 | 1.5 | 1.5 | 1.6 | 1.6 |
| | Epoxy Chemical Code | | EP-04 | EP-04 | EP-07 | EP-04 | EP-04 | EP-04 |
| | Number of functional group | | 2 | 2 | 2 | 2 | 2 | 2 |
| | MW of Epoxy Chemical | | 216 | 216 | 353 | 216 | 216 | 216 |
| | Epoxy Chemical | phr | 0.7 | 0.7 | 1.1 | 0.7 | 0.7 | 0.7 |
| | Zinc Oxide | phr | 1.0 | 0.0 | 0.0 | 1.0 | 1.0 | 1.0 |
| | Alminum compound | phr | 0.0 | 1.0 | 1.0 | 0.0 | 0.0 | 0.0 |
| | Time after compound to Dip | day | 1 | 1 | 1 | 1 | 1 | 1 |
| Evaluation of dipped product | Thickness | mm | 0.057 | 0.060 | 0.056 | 0.058 | 0.059 | 0.057 |
| | Modulus 300% | MPa | 6.8 | 8.2 | 7.3 | 8.6 | 7.0 | 8.4 |
| | Elongation at break | % | 563 | 525 | 535 | 532 | 568 | 523 |
| | Tensile strength | MPa | 39.0 | 45.2 | 48.0 | 47.0 | 44.5 | 40.0 |
| | Durability of film | min | > 360 | 330 | 165 | 305 | 240 | 175 |
| | Aging Stability ( 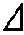 EL) | | 31 | 2 | 7 | 25 | 33 | 19 |

### <Effect of MAA residual in Latex on crosslinking>

Methacrylic acid (MAA) residual level in latex affects crosslinking performance. Glycidyl group react with any carboxylic acid group exist in water phase, such as MAA monomer residual, MAA bound polymer or oligomer. It is estimated that the reaction between glycidyl group on crosslink agent and carboxyl group on MAA residual in water will be faster than other reaction, because the mobility of MAA residual in water will be high. Considering this phenomenon, it is getting more important to minimize MAA residual in water to generate more favorable reactions.

The latex with high MAA residuals may require a higher amount of bi-functional epoxy crosslink agent to get a proper crosslink between polymer and polymer because part of reactions is disturbed by residuals. However, the crosslink-able MAA bound polymers exist on particle surface are limited number, therefore those crosslink-able point should not react with MAA residuals to get a better performance.

The aging stability of dipped products was improved using aluminum compound instead of zinc oxide as a multivalent cation donor compound.

### <Experiment C>

Experiments C were conducted using carboxylated methyl methacrylate butadiene rubber (MBR) as a polymer latex, aimed at verifying the differences in evaluation results of dipped products vary in molecular weight of the bi-functional epoxy chemicals in formulation and carboxylic acid residual in polymer latex. A glove was produced using latex polymer and formulation shown in Table 05, compounding, dipped product production process, evaluation method were exactly followed by above described and evaluation results were reported in the Table.

**Table 05**

| | | | Experime nt C1 | Experime nt C2 | Experime nt C3 | Experime nt C4 |
|---|---|---|---|---|---|---|
| | Polymer Latex No | | MBR1 | MBR2 | MBR2 | MBR3 |
| Compound Formulation | Potassium Hydroxide | phr | 1.3 | 1.4 | 1.4 | 1.5 |
| | Epoxy Chemical Code | | EP-04 | EP-05 | EP-07 | EP-05 |
| | Number of functional group | | 2 | 2 | 2 | 2 |
| | MW of Epoxy Chemical | | 216 | 256 | 353 | 256 |
| | Epoxy Chemical | phr | 0.7 | 0.8 | 1.1 | 0.8 |
| | Zinc Oxide | phr | 1.0 | 1.0 | 1.0 | 1.0 |
| | Alminum compound | phr | 0 | 0 | 0 | 0 |
| | Time after compound to Dip | day | 1 | 1 | 1 | 1 |
| Evaluation of dipped product | Thickness | mm | 0.062 | 0.059 | 0.06 | 0.06 |
| | Modulus 300% | MPa | 5.8 | 5.8 | 5.6 | 5.8 |
| | Elongation at break | % | 572 | 575 | 564 | 551 |
| | Tensile strength | MPa | 28 | 30.3 | 29.1 | 27.6 |
| | Durability of film | min | > 360 | 330 | 130 | 151 |
| | Aging Stability ( 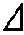 EL) | | -16 | -5 | 13 | 4 |

As is obvious from the results in Table 05, it can be confirmed that the durability of the dipped product was improved by the combination of molecular weight of the bi-functional epoxy chemicals in formulation and carboxylic acid residual in the polymer latex.

### <Experiment D>

Experiments D were aimed at verifying the differences in evaluation results of dipped products between bi-functional epoxy chemicals and tri-functional epoxy chemical in the formulation. In this experiment, the pot-life of the compounded composition was focused, compounds with 1 day and 4 days maturation were prepared. A glove was produced using latex polymer and formulation shown in Table 06. Compounding, dipped product production process, evaluation method were exactly followed by above described and evaluation results were reported in the Table.

| Table 06 | | | | | | | | | | |
|---|---|---|---|---|---|---|---|---|---|---|
| | | | Experimen t D1 | Experimen t D2 | Experimen t D3 | Experimen t D4 | Experimen t D5 | Experimen t D6 | Experime nt D7 | Experime nt D8 |
| | Latex No | | NBR1 | | NBR3 | | NBR1 | | NBR1 | |
| Compound Formulation | Potassium Hydroxide | phr | 1.4 | | 1.5 | | 1.4 | | 1.4 | |
| | Epoxy Chemical Code | | EP-03 | | EP-06 | | EP-12 | | EP-12 | |
| | Number of functional group | | 2 | | 2 | | 3 | | 3 | |
| | MW of Epoxy Chemical | | 202 | | 306 | | 302 | | 302 | |
| | Epoxy Chemical | phr | 0.6 | | 0.9 | | 0.9 | | 0.6 | |
| | Zinc Oxide | phr | 1.0 | | 1.0 | | 1.0 | | 1.0 | |
| | Alminum compound | phr | 0.0 | | 0.0 | | 0.0 | | 0.0 | |
| | Time after compound to Dip | day | 1 | 4 | 1 | 4 | 1 | 4 | 1 | 4 |
| Evaluation of dipped product | Thickness | mm | 0.058 | 0.057 | 0.058 | 0.058 | 0.059 | 0.060 | 0.059 | 0.060 |
| | Modulus 300% | MPa | 6.2 | 6.1 | 8.6 | 7.9 | 5.9 | 6.8 | 5.8 | 6.3 |
| | Elongation at break | % | 598 | 583 | 532 | 520 | 562 | 486 | 575 | 524 |
| | Tensile strength | MPa | 40.2 | 38.8 | 47.0 | 47.0 | 39.6 | 32.1 | 37.4 | 31.9 |
| | Durability of film | min | > 360 | > 360 | 301 | 345 | > 360 | 106 | 221 | 97 |
| | Aging Stability ( 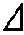 EL) | | 10 | 6 | 25 | 8 | 35 | 10 | 27 | 17 |

### <The effect of the number of epoxy functional group on pot-life of compound>

The pot-life of compound is one of the important requirements from the dipped product manufacturer, if the pot-life of compound is too short, it is not practical to use in commercial scale production. Generally, from three to five days of pot-life is required. In the experiment D results showed that in case of using tri-functional epoxy chemical, the elongation at break of the dipped product dropped significantly at 4 days product. To compensate for this reduction, if dosage of tri-functional epoxy chemical were reduced, then the durability of dipped product was deteriorated instead.

As a conclusion, it is difficult to make a balance between pot-life of compound and durability of product with tri-functional epoxy chemical due to suspected reason that tri-functional epoxy chemical is too active and may create not evenly dispersed crosslinked point in dipped product. On the other hand, bi-functional epoxy chemicals show a good balance between them. Therefore, this invention offers bi-functional epoxy chemicals with specific molecular weight range as a covalent crosslink agent.

### <Experiment E>

Experiments E were conducted aiming to get high stress retention of dipped product. In this experiment, (NBR1) with high MEK-insoluble % and (NBR6) with low MEK-insoluble % were used as polymer latex. A glove was produced using latex polymer and formulation shown in Table 07. Compounding, dipped product production process, evaluation method were exactly followed by above described and evaluation results were reported in the Table.

**Table 07**

| | | | Experime nt E1 | Experime nt E2 | Experime nt E3 | Experime nt E4 | Experime nt E5 | Experime nt E6 |
|---|---|---|---|---|---|---|---|---|
| | Polymer Latex No | | NBR1 | NBR1 | NBR1 | NBR6 | NBR6 | NBR6 |
| Compound Formulation | Potassium Hydroxide | phr | 1.2 | 1.2 | 1.2 | 1.2 | 1.2 | 1.2 |
| | Epoxy Chemical Code | | EP-04 | EP-04 | EP-04 | EP-04 | EP-04 | EP-04 |
| | Number of functional group | | 2 | 2 | 2 | 2 | 2 | 2 |
| | MW of Epoxy Chemical | | 216 | 216 | 216 | 216 | 216 | 216 |
| | Epoxy Chemical | phr | 0.7 | 0.7 | 0.7 | 0.7 | 0.7 | 0.7 |
| | Zinc Oxide | phr | 0.8 | 0.4 | 0.0 | 0.8 | 0.4 | 0.0 |
| | Alminum compound | phr | 0.0 | 0.0 | 0.4 | 0.0 | 0.0 | 0.4 |
| | Time after compound to Dip | day | 1 | 1 | 1 | 1 | 1 | 1 |
| Evaluation of dipped product | Thickness | mm | 0.057 | 0.057 | 0.057 | 0.058 | 0.057 | 0.057 |
| | Modulus 300% | MPa | 5.2 | 3.6 | 4.1 | 5.1 | 3.7 | 3.9 |
| | Elongation at break | % | 623 | 673 | 666 | 653 | 686 | 660 |
| | Tensile strength | MPa | 33.4 | 27.3 | 28.9 | 37.1 | 29.2 | 30.0 |
| | Stress Retention | % | 54.5 | 60.6 | 62.1 | 37.4 | 39.1 | 40.6 |
| | Dulability of film | min | > 360 | > 360 | > 360 | > 360 | > 360 | > 360 |
| | Aging Stability (ZEL) | | 31 | 23 | 14 | 37 | 31 | 11 |

### <The dipped products with high stress retention>

The key requirements of gloves during use are durability of gloves and elasticity of gloves, which bring user durable, reliable, safe feeling and tactile, comfortable, soft feeling together. **In** the case of synthetic gloves, it has been difficult to satisfy them together. The elasticity of gloves are well correlates with the crosslink density of the polymer consists of glove shape, a higher crosslink density provides a higher elasticity on gloves. However, if highly crosslinked polymer is prepared in dip molding process, it shows worse durability on the dipped product in case of using a conventional formulation. The elasticity of gloves can be measured by checking the stress retention of the film, higher stress retention means more elastic.

This invention provides the method to make a balance between durability and elasticity of dipped products. Experiment E results showed that the combination of high MEK-insoluble % polymer latex and bi-functional epoxy chemical with multivalent cation donor compound formulation provided higher stress retention with longer durability in glove product.

The features disclosed in the foregoing description and in the dependent claims may, both separately and in any combination thereof, be material for realizing the aspects of the disclosure made in the independent claims, in diverse forms thereof.

## Claims

1. A latex composition for dip molding comprising,
(A) a polymer comprising a structural unit derived from an ethylenically unsaturated carboxylic acid monomer; and
(B) an epoxy crosslinking agent that contains exactly two glycidyl groups and at least two ether group,
wherein
- the polymer comprises less than 2500 ppm of unreacted monomer with respect to the total mass of the polymer;
- the epoxy crosslinking agent has a molecular weight in the range of from 170 to 320; and
the epoxy crosslinking agent is comprised in the latex composition in an amount of 0.1 to 5 parts by mass based on 100 parts by mass of the polymer.

2. The latex composition for dip molding according to claim 1,
wherein the polymer comprises 50 to 78 mass% of a structural unit derived from a conjugated diene monomer, 20 to 40 mass% of a structural unit derived from an ethylenically unsaturated nitrile monomer, and 2 to 10 mass% of the structural unit derived from an ethylenically unsaturated carboxylic acid monomer, based on the total mass of the polymer, respectively..

3. The latex composition for dip molding according to claim 1 or 2, wherein the polymer has a MEK-insoluble content of 50% or more.

4. The latex composition for dip molding according to any of the preceding claims, wherein the latex composition further comprises an ionic crosslink agent selected from the group consisting of zinc oxide, aluminum compound and a mixture thereof.

5. The latex composition for dip molding according to claim 4, wherein the ionic crosslink agent is an aluminum compound.

6. The latex composition for dip molding according to claim 1, wherein the epoxy crosslinking agent is selected from the group consisting of poly(ethylene glycol) diglycidyl ether comprising 1 to 4 ethylene glycol units; 1,4-butanediol diglycidyl ether; neopentyl glycol diglycidyl ether; and a mixture of two or more thereof.

7. A dipped product obtainable by a process comprising a step of curing the dip molding composition according to any one of the preceding claims.

8. The dipped product according to claim 7, wherein the dipped product is a glove.

## Amended claims

### Amended claims in accordance with Rule 137(2) EPC.

1. A latex composition for dip molding comprising,
(A) a polymer comprising a structural unit derived from an ethylenically unsaturated carboxylic acid monomer; and
(B) an epoxy crosslinking agent with an aliphatic main structure that contains exactly two glycidyl groups and at least two ether group,
wherein
- the polymer comprises less than 2500 ppm of unreacted monomer, measured as set forth in the description, with respect to the total mass of the polymer, wherein the unreacted monomer is methacrylic acid;
- the epoxy crosslinking agent has a molecular weight in the range of from 170 to 320;
the epoxy crosslinking agent is comprised in the latex composition in an amount of 0.1 to 5 parts by mass based on 100 parts by mass of the polymer; and
the latex composition further comprises an ionic crosslink agent selected from the group consisting of zinc oxide, an aluminum salt, an aluminum oxide and a mixture thereof.

2. The latex composition for dip molding according to claim 1,
wherein the polymer comprises 50 to 78 mass% of a structural unit derived from a conjugated diene monomer, 20 to 40 mass% of a structural unit derived from an ethylenically unsaturated nitrile monomer, and 2 to 10 mass% of the structural unit derived from an ethylenically unsaturated carboxylic acid monomer, based on the total mass of the polymer, respectively..

3. The latex composition for dip molding according to claim 1 or 2, wherein the polymer has a methyl ethyl ketone-insoluble content of 50% or more, measured as set forth in the description.

4. The latex composition for dip molding according to claim 1, wherein the ionic crosslink agent is an aluminum salt, an aluminum oxide or a mixture thereof.

5. The latex composition for dip molding according to claim 1, wherein the epoxy crosslinking agent is selected from the group consisting of poly(ethylene glycol) diglycidyl ether comprising 1 to 4 ethylene glycol units; 1,4-butanediol diglycidyl ether; neopentyl glycol diglycidyl ether; and a mixture of two or more thereof.

6. A dipped product obtainable by a process comprising a step of curing the dip molding composition according to any one of the preceding claims.

7. The dipped product according to claim 6, wherein the dipped product is a glove.
